# EUROPÄISCHE PATENTSCHRIFT

(11) **EP 2 271 863 B1**
(45) Veröffentlichungstag und Bekanntmachung des Hinweises auf die Patenterteilung: **16.03.2016**
(21) Anmeldenummer: 09741943.6
(22) Anmeldetag: 23.03.2009
(51) Int. Cl.: F16H 61/04, F16H 61/682

(54) **VERFAHREN ZUR SCHALTSTEUERUNG EINES AUTOMATISIERTEN SCHALTGETRIEBES**
SHIFT CONTROL METHOD IN AN AUTOMATED MANUAL TRANSMISSION
PROCÉDÉ DE COMMANDE DE CHANGEMENT DE VITESSES D'UNE BOÎTE DE VITESSES AUTOMATIQUE

(30) Priorität: 09.05.2008 DE 102008001686
(43) Veröffentlichungstag der Anmeldung: 12.01.2011
(73) Patentinhaber: ZF Friedrichshafen AG, 88038 Friedrichshafen (DE)
(72) Erfinder: DÖBELE, Bernd, 88682 Salem (DE); WIENCEK, Norbert, 88709 Hagnau (DE)
(86) Internationale Anmeldenummer: PCT/EP2009/053348
(87) Internationale Veröffentlichungsnummer: WO 2009/135725

(56) Entgegenhaltungen:
- EP-A- 1 273 831
- DE-A1-102005 002 496

## Beschreibung

Die Erfindung betrifft ein Verfahren zur Schaltsteuerung eines automatisierten Schaltgetriebes, das in einem Antriebsstrang eines Kraftfahrzeugs zwischen einem Antriebsmotor und einem Achsantrieb angeordnet ist, das mit unsynchronisierten Gangkupplungen versehen ist, und dessen Eingangswelle über eine automatisiert steuerbare Trennkupplung mit der Triebwelle des Antriebsmotors verbindbar ist, wobei bei einer Hochschaltung die Synchronisierung des Zielgangs bei geöffneter Trennkupplung durch die Einstellung eines weitgehend konstanten Bremsmomentes an einer mit der Eingangswelle in Triebverbindung stehenden Getriebebremse erfolgt.

In einem Schaltgetriebe tritt bei einer Schaltung zwischen einem Lastgang und einem Zielgang nach dem Auslegen des Lastgangs an der dem Zielgang zugeordneten und noch ausgerückten getriebeinternen Gangkupplung eine Drehzahldifferenz auf, die vor dem Einlegen des Zielgangs, also vor dem Einrücken der betreffenden Gangkupplung, ausgeglichen werden muss. Dieser Vorgang wird allgemein als Synchronisierung bezeichnet und erfolgt praktisch durch eine Drehzahlanpassung des mit der Eingangswelle des Schaltgetriebes in Triebverbindung stehenden eingangsseitigen Teils der Gangkupplung.

Bei einer Hochschaltung dreht der eingangsseitige Teil der Gangkupplung des Zielgangs nach dem Auslegen des Lastgangs schneller als der ausgangsseitige Teil der Gangkupplung, so dass die Eingangswelle zur Synchronisierung des Zielgangs verzögert werden muss. Bei einer Rückschaltung dreht sich der eingangsseitige Teil der Gangkupplung des Zielgangs nach dem Auslegen des Lastgangs dagegen langsamer als der ausgangsseitige Teil der Gangkupplung, so dass die Eingangswelle zur Synchronisierung des Zielgangs beschleunigt werden muss.

In einem mit synchronisierten Gangkupplungen versehenen Schaltgetriebe erfolgt die Synchronisierung des jeweiligen Zielgangs bzw. der dem Zielgang zugeordneten Gangkupplung über eine Reibring-Synchronisiereinrichtung, die der eigentlichen, mit formschlüssig ineinander greifenden Kupplungsverzahnungen versehenen Gangkupplung vorgeschaltet ist. Bei der Synchronisierung des Zielgangs wird die an der Gangkupplung anliegende Drehzahldifferenz passiv, d.h. durch die Wirkung der betreffenden Schaltkraft, mittels eines zwischen den Reibringen der Synchronisiereinrichtung erzeugten Reibmomentes ausgeglichen, bevor die Gangkupplung unter der Wirkung der Schaltkraft eingerückt und damit der Zielgang eingelegt werden kann. Derartige sperrsynchronisierte Gangkupplungen sind jedoch relativ kompliziert aufgebaut und entsprechend teuer herstellbar. Auch erfordern synchronisierte Gangkupplungen innerhalb des Schaltgetriebes einen relativ großen Bauraum und vergrößern somit die Abmessungen sowie das Gewicht des Schaltgetriebes. Aufgrund der verschleißbehafteten Wirkungsweise der Synchronisiereinrichtungen ist zudem die Lebensdauer eines mit synchronisierten Gangkupplungen versehenen Schaltgetriebes eingeschränkt.

Im Gegensatz dazu sind unsynchronisierte Gangkupplungen, die allgemein als Klauenkupplungen bezeichnet werden, einfach und kompakt aufgebaut, preiswert herstellbar, und sie weisen bei sachgemäß durchgeführten Schaltungen einen geringen Verschleiß und demzufolge eine hohe Lebensdauer auf. In einem mit unsynchronisierten Gangkupplungen versehenen Schaltgetriebe ist jedoch eine Fremdsynchronisierung des jeweiligen Zielgangs bzw. der dem Zielgang zugeordneten Gangkupplung erforderlich. Zur Fremdsynchronisierung des Zielgangs ist es beispielsweise bekannt, die Eingangswelle des Schaltgetriebes bei einer Hochschaltung mittels einer an der Eingangswelle oder an einer mit dieser in Triebverbindung stehenden Vorgelegewelle angeordneten Getriebebremse zu verzögern und bei einer Rückschaltung durch ein teilweises Schließen der Trennkupplung in Verbindung mit einer Drehzahlführung des vorzugsweise als Verbrennungskolbenmotor ausgebildeten Antriebsmotors zu beschleunigen.

Vorliegend wird von einer Getriebebremse ausgegangen, die nicht regelbar ist, sondern konstruktiv bedingt oder durch eine entsprechende Betätigung mit einer konstanten Anpresskraft oder einem konstanten Anpressdruck auf ein konstantes Bremsmoment M_{Br} einstellbar ist. Hierdurch kann die Getriebebremse und die zugeordnete Betätigungseinrichtung einfach, kompakt und kostengünstig aufgebaut werden, wodurch eine Integration in ein bestehendes Schaltgetriebe auf relativ einfache Weise möglich ist. Das weitgehend konstante Bremsmoment M_{Br} der Getriebebremse kann jedoch durch äußere Einflüsse, wie die aktuelle Umgebungs- oder Betriebstemperatur und den Verschleißzustand der Reibbeläge, von einem Sollwert abweichen, wodurch die Synchronisierung des Zielgangs bei einer Hochschaltung verzögert oder beschleunigt werden kann. Bei der Trennkupplung handelt es sich um eine automatisiert steuerbare Reibungskupplung, die als Anfahr- und Schaltkupplung genutzt, also bei Anfahr- und Schaltvorgängen geöffnet und geregelt geschlossen wird.

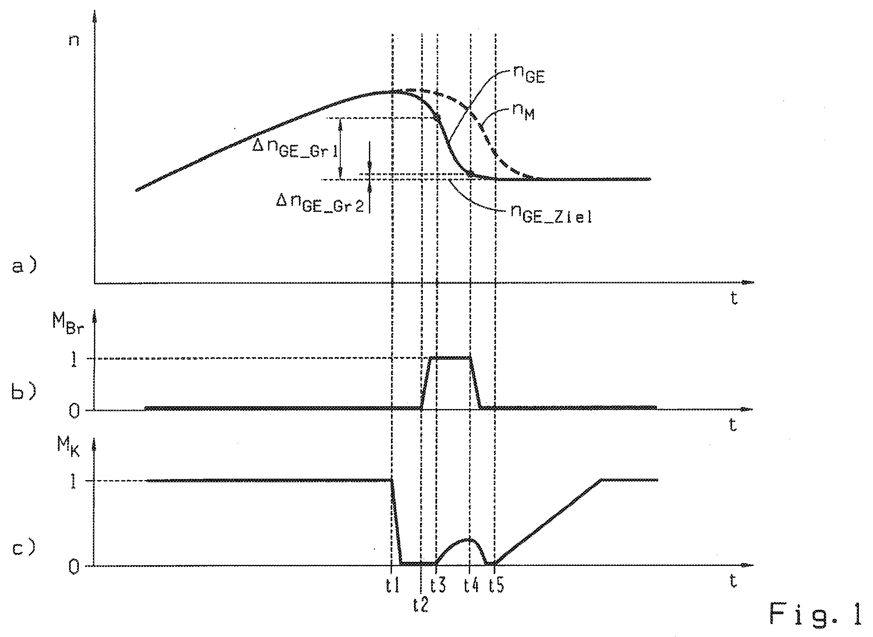

Die Anordnung einer Getriebebremse an der Eingangswelle eines als Gruppengetriebe ausgebildeten, ein Hauptgetriebe und eine diesem nachgeschaltete Bereichsgruppe umfassenden Schaltgetriebes ist beispielsweise aus der DE 10 2005 002 496 A1 (siehe dortige Fig. 1) bekannt, wobei das Hauptgetriebe als mehrstufiges Vorgelegegetriebe und die Bereichsgruppe als zweistufiges Planetengetriebe ausgeführt sind. Die Anordnung einer Getriebebremse an einer über ein Eingangszahnradpaar (Eingangskonstante) mit der Eingangswelle in Triebverbindung stehenden Vorgelegewelle eines in Vorgelegebauweise ausgeführten Schaltgetriebes ist dagegen in der DE 102 42 823 A1 (siehe dortige Fig. 3) beschrieben. Das Dokument EP 1 273 831 A zeigt dem nächstliegenden Stand der Technik mit allen Merkmalen des Oberbegriffs des Anspruch 1.

Um bei einer Hochschaltung eine schnelle Synchronisierung des Zielgangs und ein problemloses Einrücken der unsynchronisierten Gangkupplung des Zielgangs zu erreichen, sollte die Bremswirkung, also das Bremsmoment M_{Br} der Getriebebremse, möglichst hoch sein, die Getriebebremse bis nahe an das Erreichen der Synchrondrehzahl an der betreffenden Gangkupplung geschlossen sein, die Getriebebremse nach einer asymptotischen Annäherung der Eingangsdrehzahl n_{GKE} an die Ausgangsdrehzahl n_{GKA} der Gangkupplung des Zielgangs beim Einrücken der Gangkupplung gelöst sein und beim Einrücken der Gangkupplung zur Unterstützung des Einspurens der Kupplungsverzahnungen noch eine minimale Drehzahldifferenz an der Gangkupplung vorhanden sein. Diese Anforderungen sind jedoch allein mit einer Getriebebremse, deren Bremsmoment M_{Br} über der zu reduzierenden Drehzahldifferenz Δn_{GK} an der Gangkupplung konstant ist, nicht zu erfüllen. So ist die Getriebebremse bei einem höheren Bremsmoment M_{Br} unterhalb einer bestimmten Drehzahldifferenz Δn_{GK} nicht mehr nutzbar, oder die Getriebebremse weist ein so niedriges Bremsmoment M_{Br} auf, dass die Synchronisierung des Zielgangs und damit der gesamte Hochschaltvorgang zeitlich stark verzögert wird.

Vor diesem Hintergrund liegt der vorliegenden Erfindung die Aufgabe zugrunde, ein Verfahren anzugeben, mit dem bei einem Antriebsstrang der eingangs genannten Art eine Hochschaltung ohne besondere konstruktive Maßnahmen beschleunigt durchgeführt werden kann.

Die erfindungsgemäße Lösung dieser Aufgabe besteht in Verbindung mit den Merkmalen des Oberbegriffs des Anspruchs 1 darin, dass mit der Annäherung der Eingangsdrehzahl n_{GKE} an die Ausgangsdrehzahl n_{GKA} der Gangkupplung des Zielgangs, also mit der Annäherung der Drehzahldifferenz Δn_{GK} = n_{GKE} - n_{GKA} an der Gangkupplung des Zielgangs an den Wert Null, zur Beendigung der Synchronisierung die Trennkupplung teilweise geschlossen und in etwa zeitgleich mit dem Lösen der Getriebebremse wieder geöffnet wird.

Das dadurch über die Trennkupplung von dem Antriebsmotor auf die Eingangswelle des Schaltgetriebes übertragene Kupplungsmoment M_{K} wirkt dem von der Getriebebremse auf die Eingangswelle oder eine mit der Eingangswelle in Triebverbindung stehende Vorgelegewelle übertragenen Bremsmoment M_{Br} entgegen und bewirkt somit eine schnelle Beendigung der über die Getriebebremse erfolgenden Synchronisierung des Zielgangs bzw. der Gangkupplung des Zielgangs. Da sich das Kupplungsmoment M_{K} der Trennkupplung gegenüber der Triebwelle (Kurbelwelle) des Antriebsmotors abstützt, wird durch das dadurch verursachte Abbremsen der Triebwelle zudem die schaltungsbedingte Drehzahlanpassung des Antriebsmotors unterstützt und beschleunigt.

Die durch die Betätigung der Trennkupplung ermöglichte Beschleunigung der Synchronisierung des Zielgangs und damit des gesamten Hochschaltvorgangs wird im wesentlichen dadurch erzielt, dass die Getriebebremse bei unverändertem Bremsmoment M_{Br} länger betätigt wird und/oder dass an der Getriebebremse ein erhöhtes Bremsmoment M_{Br} eingestellt wird.

Ein erhöhtes Bremsmoment M_{Br} der Getriebebremse kann entweder durch die Verwendung einer verstärkten Getriebebremse konstruktiv vorgegeben werden oder durch eine Betätigung der vorhandenen Getriebebremse mit einer erhöhten Anpresskraft oder einem erhöhten Anpressdruck erzeugt werden.

Das Schließen der Trennkupplung während der Synchronisierung des Zielgangs beginnt zweckmäßig bei Erreichen oder Unterschreiten einer vorgebbaren höheren ersten Grenzdrehzahldifferenz Δn_{GK_Gr1} an der Gangkupplung des Zielgangs.

Ebenso ist es zweckmäßig, dass das Öffnen der Trennkupplung während der Synchronisierung des Zielgangs bei Erreichen oder Unterschreiten einer vorgebbaren niedrigeren zweiten Grenzdrehzahldifferenz Δn_{GK_Gr2}; (|Δn_{GK_Gr2}| < |Δn_{GK_Gr1}|) an der Gangkupplung des Zielgangs beginnt.

Während die Getriebebremse, wie eingangs vorausgesetzt wurde, nicht regelbar ist, sondern nur beim Einschalten auf ein konstantes Bremsmoment M_{Br} eingestellt und wieder abgeschaltet werden kann, ist die automatisiert steuerbare Trennkupplung zur Steuerung von Anfahr- und Schaltvorgängen sowie zur Synchronisierung des jeweiligen Zielgangs bei Rückschaltungen regelbar ausgebildet. Daher wird die Regelbarkeit des Kupplungsmomentes M_{K} vorliegend bei Hochschaltungen auch zur Beendigung der Synchronisierung genutzt, indem das Schließen und Öffnen der Trennkupplung vorteilhaft jeweils in Abhängigkeit der momentanen Drehzahldifferenz Δn_{GK} = n_{GKE} - n_{GKA} an der Gangkupplung des Zielgangs geregelt wird.

Dabei wird beim Schließen der Trennkupplung der Momentenaufbaugradient *d* M_{K} / *d*t > 0 und die Höhe des eingestellten Kupplungsmomentes M_{K} zweckmäßig umgekehrt proportional zur Drehzahldifferenz Δn_{GK} geregelt (*d* M_{K} / *d*t ∼ 1 / Δn_{GK} ; M_{K} ∼ 1 / Δn_{GK}), und beim Öffnen der Trennkupplung der Momentenabbaugradient *d* M_{K} / *d* t < 0 des eingestellten Kupplungsmomentes M_{K} zweckmäßig absolut proportional zur Drehzahldifferenz Δn_{GK} geregelt (|*d* M_{K} / *d*t| | ∼ Δn_{GK}).

Dies bedeutet, dass das Kupplungsmoment M_{K} der Trennkupplung in der Momentenaufbauphase bei Vorliegen einer höheren Drehzahldifferenz Δn_{GK} weniger schnell und weniger stark aufgebaut wird als bei einer niedrigeren Drehzahldifferenz Δn_{GK}, um der Synchronisierung durch das Bremsmoment M_{Br} der Getriebebremse nicht zu früh und zu stark entgegenzuwirken.

In der Momentenabbauphase wird das Kupplungsmoment M_{K} der Trennkupplung bei Vorliegen einer niedrigeren Drehzahldifferenz Δn_{GK} dagegen schneller abgebaut als bei einer höheren Drehzahldifferenz Δn_{GK}, um eine für das Einspuren der Gangkupplung des Zielgangs vorteilhafte Drehzahldifferenz Δn_{GK} zu erhalten und eine unerwünschte Beschleunigung der Eingangswelle des Schaltgetriebes durch das Kupplungsmoment M_{K} der Trennkupplung zu vermeiden.

Aus ähnlichen Gründen ist es zudem vorteilhaft, wenn das Schließen und Öffnen der Trennkupplung jeweils in Abhängigkeit von dem momentanen Differenzdrehzahlgradienten *d* Δn_{GK} / *d*t < 0 an der Gangkupplung des Zielgangs geregelt wird, wobei beim Schließen der Trennkupplung der Momentenaufbaugradient *d* M_{K} / *d*t > 0 und die Höhe des eingestellten Kupplungsmomentes M_{K} zweckmäßig proportional zu dem Absolutwert des Differenzdrehzahlgradienten *d* Δn_{GK} / *d*t < 0 eingestellt werden (*d* M_{K} / *d*t ∼ |*d* Δn_{GK} / *d*t|, M_{K} ∼ |*d* Δn_{GK} / *d*t|), und beim Öffnen der Trennkupplung der Momentenabbaugradient *d* M_{K} / *d*t < 0 und die Höhe des eingestellten Kupplungsmomentes M_{K} zweckmäßig absolut proportional zu dem Absolutwert des Differenzdrehzahlgradienten *d* Δn_{GK}/ *d*t eingestellt wird (|*d* M_{K} / *d*t| ∼ |*d* Δn_{GK} / *d*t|).

Hierdurch wird das Kupplungsmoment M_{K} der Trennkupplung in der Momentenaufbauphase bei schneller Synchronisierung des Zielgangs durch die Getriebebremse schneller und stärker aufgebaut als bei langsamer Synchronisierung, um der Verzögerung der Eingangswelle durch das Bremsmoment M_{Br} der Getriebebremse rechtzeitig und wirkungsvoll entgegenzuwirken, und in der Momentenabbauphase bei schneller Synchronisierung des Zielgangs schneller abgebaut als bei langsamer Synchronisierung, um eine für das Einspuren der Gangkupplung des Zielgangs vorteilhafte Drehzahldifferenz Δn_{GK} zu erhalten und eine unerwünschte Beschleunigung der Eingangswelle des Schaltgetriebes durch das Kupplungsmoment M_{K} der Trennkupplung zu vermeiden.

Durch das erfindungsgemäße Verfahren wird bei einer Hochschaltung somit die Synchronisierung des Zielgangs bzw. der Gangkupplung des Zielgangs und damit der gesamte Hochschaltvorgang deutlich beschleunigt, ohne dass dafür besondere konstruktive Maßnahmen erforderlich sind. Das erfindungsgemäße Verfahren lässt sich leicht in ein vorhandenes Kupplungs- oder Getriebesteuergerät in Form eines Programms einfügen.

Zur Verdeutlichung der Erfindung ist der Beschreibung eine Zeichnung mit einem Ausführungsbeispiel beigefügt. Diese zeigt in Fig. 1 Drehzahl- und Drehmomentverläufe bei einer erfindungsgemäßen Synchronisierung des Zielgangs bei einer Hochschaltung.

In den Diagrammen von Fig. 1 sind für einen erfindungsgemäßen Ablauf einer Hochschaltung die Zeitverläufe charakteristischer Betriebsparameter eines Antriebsstrangs wiedergegeben, der ein mit unsynchronisierten Gangkupplungen versehenes automatisiertes Schaltgetriebe umfasst, dessen Eingangswelle über eine automatisiert steuerbare Trennkupplung mit der Triebwelle eines Antriebsmotors in Verbindung steht, und das eine mit der Eingangswelle in Triebverbindung stehende Getriebebremse aufweist. In dem Teildiagramm a) sind die Drehzahlverläufe der Eingangswelle n_{GE} des Schaltgetriebes und der Triebwelle des Antriebsmotors n_{M}, in dem Teildiagramm b) der Drehmomentverlauf M_{Br} der Getriebebremse, und in dem Teildiagramm c) der Drehmomentverlauf des übertragbaren Drehmomentes M_{K} der Trennkupplung dargestellt.

Zu Beginn des Hochschaltvorgangs erfolgen in etwa zeitgleich ab dem Zeitpunkt t1 der Lastabbau an dem Antriebsmotor und das vollständige Öffnen der Trennkupplung. Hierzu ist in dem Teildiagramm c) der vollständig geschlossene Zustand der Trennkupplung mit M_{K} = 1 und der vollständig geöffnete Zustand der Trennkupplung mit M_{K} = 0 bezeichnet. Nach dem Auslegen des zuvor lastführenden Lastgangs wird ab dem Zeitpunkt t2 die Getriebebremse betätigt, um den höheren Zielgang zu synchronisieren, d.h. die Eingangsdrehzahl n_{GKE} des mit der Eingangswelle in Triebverbindung stehenden eingangsseitigen Teils der Gangkupplung des Zielgangs durch Abbremsen an die Ausgangsdrehzahl n_{GKA} des über die Ausgangswelle und einen Achsantrieb mit den Antriebsrädern des Kraftfahrzeugs in Triebverbindung stehenden ausgangsseitigen Teils der Gangkupplung des Zielgangs anzupassen. Hierzu wird die ungeregelt ausgebildete Getriebebremse, ausgehend von dem in Teildiagramm b) mit M_{Br} = 0 bezeichneten unbetätigten Zustand auf ein weitgehend konstantes Bremsmoment M_{Br} eingestellt, das im Teildiagramm b) mit M_{Br} = 1 bezeichnet ist.

Mit der Verringerung der Drehzahldifferenz Δn_{GK} = n_{GKE} - n_{GKA} an der Gangkupplung des Zielgangs wird bei Erreichen einer vorgegebenen höheren ersten Grenzdrehzahldifferenz Δn_{GK_Gr1} ab dem Zeitpunkt t3 die Trennkupplung teilweise geschlossen und damit dem Abbremsen der Eingangswelle durch die Getriebebremse mit einem relativ niedrigen Kupplungsmoment M_{K} << 1 entgegengewirkt. Dabei wird der Aufbaugradient *d* M_{K} / *d*t > 0 an der Kupplung und die Höhe des Kupplungsmomentes M_{K} zumindest in Abhängigkeit von der momentanen Drehzahldifferenz Δn_{GK} an der Gangkupplung des Zielgangs geregelt. Die Drehzahldifferenz Δn_{GK} sowie die Grenzdrehzahldifferenz Δn_{GK_Gr1} an der Gangkupplung bilden sich in dem in Teildiagramm a) abgebildeten Drehzahlverlauf der Eingangswelle jeweils durch eine Multiplikation mit der Übersetzung i_{GK} zwischen der Eingangswelle und der Gangkupplung des Zielgangs ab (Δn_{GE} = n_{GE} - n_{GE_Ziel} = i_{GK} * Δn_{GK} und Δn_{GE_Gr1} = i_{GK} * Δn_{GK_Gr1}).

Mit der weiteren Verringerung der Drehzahldifferenz Δn_{GK} = n_{GKE} - n_{GKA} an der Gangkupplung des Zielgangs werden bei Erreichen einer vorgegebenen niedrigeren zweiten Grenzdrehzahldifferenz Δn_{GK_Gr2} (Δn_{GE_Gr2} = i_{GK} * Δn_{GK_Gr2}) ab dem Zeitpunkt t4 in etwa zeitgleich die Getriebebremse geöffnet (M_{Br} = 0) und die Trennkupplung wieder vollständig geöffnet (M_{K} = 0). Das Öffnen der Trennkupplung erfolgt zweckmäßig derart, dass eine unerwünschte Beschleunigung der Eingangswelle vermieden wird und eine für das Einspuren der Kupplungsverzahnungen der Gangkupplung des Zielgangs günstige minimale Drehzahldifferenz Δn_{GK} erhalten bleibt. Hierzu wird der Abbaugradient *d* M_{K} / *d* t < 0 des Kupplungsmomentes M_{K} zumindest in Abhängigkeit von der momentanen Drehzahldifferenz Δn_{GK} an der Gangkupplung des Zielgangs geregelt.

Nach Erreichen des Synchronlaufs und dem Einrücken der Gangkupplung des Zielgangs werden ab dem Zeitpunkt t5 die Trennkupplung vollständig geschlossen sowie die zuvor schon begonnene und durch das teilweise Schließen der Trennkupplung unterstützte Drehzahlanpassung des Antriebsmotors abgeschlossen (siehe Verlauf der Motordrehzahl n_{M}).

Da die Eingangswelle des Getriebes durch die vorübergehende Betätigung der Trennkupplung während der Verzögerung durch die Getriebebremse praktisch "eingefangen" wird, kann die Getriebebremse bei unverändert hohem Bremsmoment M_{Br} länger oder auch mit einem höheren Bremsmoment M_{Br} betätigt werden. Hierdurch ergibt sich ohne einen zusätzlichen konstruktiven Aufwand eine Beschleunigung der Synchronisierung des Zielgangs und damit eine Verkürzung des gesamten Hochschaltvorgangs.

### Bezugszeichen

- i_{GK}: Übersetzung zwischen Eingangswelle und Gangkupplung
- M_{Br}: Bremsmoment
- M_{K}: Kupplungsmoment
- *d* M_{K} / *d*t: Momentenaufbaugradient, Momentenabbaugradient
- n: Drehzahl
- n_{GE}: Drehzahl der Eingangswelle
- n_{GE_Ziel}: Zieldrehzahl der Eingangswelle
- n_{GKA}: Ausgangsdrehzahl an Gangkupplung
- n_{GKE}: Eingangsdrehzahl an Gangkupplung
- n_{M}: Motordrehzahl
- Δn: Drehzahldifferenz
- Δn_{GE}: Drehzahldifferenz an Eingangswelle
- Δn_{GE_Gr1}: Erste Grenzdrehzahldifferenz an Eingangswelle
- Δn_{GE_Gr2}: Zweite Grenzdrehzahldifferenz an Eingangswelle
- Δn_{GK}: Drehzahldifferenz an Gangkupplung
- Δn_{GK_Gr1}: Erste Grenzdrehzahldifferenz an Gangkupplung
- Δn_{GK_Gr2}: Zweite Grenzdrehzahldifferenz an Gangkupplung
- *d* Δn_{GK} / *d*t: Differenzdrehzahlgradient an Gangkupplung
- t: Zeit
- t1 - t5: Zeitpunkte

## Patentansprüche

1. Verfahren zur Schaltsteuerung eines automatisierten Schaltgetriebes, das in einem Antriebsstrang eines Kraftfahrzeugs zwischen einem Antriebsmotor und einem Achsantrieb angeordnet ist, das mit unsynchronisierten Gangkupplungen versehen ist, und dessen Eingangswelle über eine automatisiert steuerbare Trennkupplung mit der Triebwelle des Antriebsmotors verbindbar ist, wobei bei einer Hochschaltung die Synchronisierung des Zielgangs bei geöffneter Trennkupplung durch die Einstellung eines weitgehend konstanten Bremsmomentes (M_{Br}) an einer mit der Eingangswelle in Triebverbindung stehenden Getriebebremse erfolgt, **dadurch gekennzeichnet, dass** mit der Annäherung der Eingangsdrehzahl (n_{GKE}) an die Ausgangsdrehzahl (n_{GKA}) der Gangkupplung des Zielgangs zur Beendigung der Synchronisierung die Trennkupplung teilweise geschlossen und in etwa zeitgleich mit dem Lösen der Getriebebremse wieder geöffnet wird.

2. Verfahren nach Anspruch 1, **dadurch gekennzeichnet, dass** die Getriebebremse bei unverändertem Bremsmoment (M_{Br}) länger betätigt wird.

3. Verfahren nach Anspruch 1 oder 2, **dadurch gekennzeichnet, dass** an der Getriebebremse ein erhöhtes Bremsmoment (M_{Br}) eingestellt wird.

4. Verfahren nach Anspruch 3, **dadurch gekennzeichnet, dass** das erhöhte Bremsmoment (M_{Br}) der Getriebebremse durch die Verwendung einer verstärkten Getriebebremse konstruktiv vorgegeben wird.

5. Verfahren nach Anspruch 3, **dadurch gekennzeichnet, dass** das erhöhte Bremsmoment (M_{Br}) der Getriebebremse durch eine Betätigung der Getriebebremse mit einer erhöhten Anpresskraft oder einem erhöhten Anpressdruck erzeugt wird.

6. Verfahren nach einem der Ansprüche 1 bis 5, **dadurch gekennzeichnet, dass** das Schließen der Trennkupplung bei Erreichen oder Unterschreiten einer vorgebbaren höheren ersten Grenzdrehzahldifferenz (Δn_{GK_Gr1}) an der Gangkupplung des Zielgangs beginnt (t3).

7. Verfahren nach einem der Ansprüche 1 bis 6, **dadurch gekennzeichnet, dass** das Öffnen der Trennkupplung bei Erreichen oder Unterschreiten einer vorgebbaren niedrigeren zweiten Grenzdrehzahldifferenz (Δn_{GK_Gr2}; |Δn_{GK_Gr1}| < |Δn_{GK_Gr1}|) an der Gangkupplung des Zielgangs beginnt (t4).

8. Verfahren nach einem der Ansprüche 1 bis 7, **dadurch gekennzeichnet, dass** das Schließen und Öffnen der Trennkupplung jeweils in Abhängigkeit von der momentanen Drehzahldifferenz (Δn_{GK} = n_{GKE} - n_{GKA}) an der Gangkupplung des Zielgangs geregelt wird.

9. Verfahren nach Anspruch 8, **dadurch gekennzeichnet, dass** beim Schließen der Trennkupplung der Momentenaufbaugradient der Trennkupplung (*d* M_{K} / *dt* > 0) und die Höhe des eingestellten Kupplungsmomentes (M_{K}) umgekehrt proportional zur Drehzahldifferenz (Δn_{GK}) geregelt werden (*d* M_{K} / *d*t ∼ 1 / Δn_{GK}, M_{K} ∼ 1 / Δn_{GK}).

10. Verfahren nach Anspruch 8 oder 9, **dadurch gekennzeichnet, dass** beim Öffnen der Trennkupplung der Momentenabbaugradient der Trennkupplung (*d* M_{K} / *d*t < 0) und die Höhe des eingestellten Kupplungsmomentes (M_{K}) absolut proportional zur Drehzahldifferenz (Δn_{GK}) geregelt werden (|*d* M_{K} / *d*t| ∼ Δn_{GK}).

11. Verfahren nach einem der Ansprüche 1 bis 10, **dadurch gekennzeichnet, dass** das Schließen und Öffnen der Trennkupplung jeweils in Abhängigkeit des momentanen Differenzdrehzahlgradienten (*d* Δn_{GK} / *d* t < 0) an der Gangkupplung des Zielgangs geregelt wird.

12. Verfahren nach Anspruch 11, **dadurch gekennzeichnet, dass** beim Schließen der Trennkupplung der Momentenaufbaugradient (*d* M_{K} / *d*t > 0) und die Höhe des eingestellten Kupplungsmomentes (M_{K}) proportional zu dem Absolutwert des Differenzdrehzahlgradienten (d Δn_{GK} / *d*t < 0) geregelt werden (*d* M_{K} *l dt ∼* |*d* Δn*_{GK}* / *d*t|, M_{K} ∼ |*d* Δn_{GK} / *d*t|).

13. Verfahren nach Anspruch 11 oder 12, **dadurch gekennzeichnet, dass** beim Öffnen der Trennkupplung der Momentenabbaugradient (*d* M_{K} / *d*t < 0) und die Höhe des eingestellten Kupplungsmomentes (M_{K}) absolut proportional zu dem Absolutwert des Differenzdrehzahlgradienten (*d* Δn_{GK} / *d*t) geregelt werden (|*d* M_{K}/ *d*t| ∼ |*d*Δn_{GK} / *d*t|).

## Claims

1. Gearshift control method of an automated shift gearbox which is arranged in a drivetrain of a motor vehicle between a drive engine and an axle drive, which gearbox is equipped with unsynchronised gear clutches and the input shaft of which gearbox is connectable to the driveshaft of the drive engine by way of a separating clutch that can be controlled in automated fashion, wherein, during an upshift, the synchronization of the target gear takes place, with separating clutch open, through the setting of a substantially constant braking torque (M_{Br}) at a gearbox brake which is connected in terms of drive to the input shaft, **characterized in that**, as the input rotational speed (n_{GKE}) approaches the output rotational speed (n_{GKA}) of the gear clutch of the target gear, to end the synchronization, the separating clutch is partially closed and is opened again approximately simultaneously with the release of the gearbox brake.

2. Method according to Claim 1, **characterized in that** the gearbox brake is actuated for longer with an unchanged braking torque (M_{Br}).

3. Method according to Claim 1 or 2, **characterized in that** an increased braking torque (M_{Br}) is set at the gearbox brake.

4. Method according to Claim 3, **characterized in that** the increased braking torque (M_{Br}) of the gearbox brake is structurally predefined through the use of a strengthened gearbox brake.

5. Method according to Claim 3, **characterized in that** the increased braking torque (M_{Br}) of the gearbox brake is generated by way of an actuation of the gearbox brake with an increased contact force or an increased contact pressure.

6. Method according to one of Claims 1 to 5, **characterized in that** the closing of the separating clutch begins (t3) when a predefinable, relatively high first threshold rotational speed difference (Δn_{GK_Gr1}) is reached or undershot at the gear clutch of the target gear.

7. Method according to one of Claims 1 to 6, **characterized in that** the opening of the separating clutch begins (t4) when a predefinable, relatively low second threshold rotational speed difference (Δn_{GK_Gr2}; |Δn_{GK_Gr2}| < |Δn_{GK_Gr1}|) is reached or undershot at the gear clutch of the target gear.

8. Method according to one of Claims 1 to 7, **characterized in that** the closing and opening of the separating clutch is regulated in each case in a manner dependent on the present rotational speed difference (Δn_{GK} = n_{GKE} - n_{GKA}) at the gear clutch of the target gear.

9. Method according to Claim 8, **characterized in that**, during the closing of the separating clutch, the torque build-up gradient of the separating clutch (d M_{K} / *d* t > 0) and the magnitude of the set clutch torque (M_{K}) are regulated inversely proportionally to the rotational speed difference (Δn_{GK}) (*d* M_{K} / *d* t ∼ 1 / Δn_{GK}, M_{K} ∼ 1 / Δn_{GK}).

10. Method according to Claim 8 or 9, **characterized in that**, during the opening of the separating clutch, the torque depletion gradient of the separating clutch (*d* M_{K} / *d* t < 0) and the magnitude of the set clutch torque (M_{K}) are regulated absolutely proportionally to the rotational speed difference (Δn_{GK}) (| *d* M_{K} / *d* t| ∼ Δn_{GK}).

11. Method according to one of Claims 1 to 10, **characterized in that** the closing and opening of the separating clutch is regulated in each case in a manner dependent on the present rotational speed difference gradient (*d* Δn_{GK} / *d* t < 0) at the gear clutch of the target gear.

12. Method according to Claim 11, **characterized in that**, during the closing of the separating clutch, the torque build-up gradient (*d* M_{K} / *d* t > 0) and the magnitude of the set clutch torque (M_{K}) are regulated proportionally to the absolute value of the rotational speed difference gradient (*d* Δn_{GK} / *d* t < 0) (*d* M_{K} / *d* t ∼ |*d* Δn_{GK} / *d* t|, M_{K} ∼ |*d* Δn_{GK} / *d* t|).

13. Method according to Claim 11 or 12, **characterized in that**, during the opening of the separating clutch, the torque depletion gradient (*d* M_{K} / *d* t < 0) and the magnitude of the set clutch torque (M_{K}) are regulated absolutely proportionally to the absolute value of the rotational speed difference gradient (*d* Δn_{GK} / *d* t) (| *d* M_{K} / *d* t| ∼ Δn_{GK} / *d* t|).

## Revendications

1. Procédé de commande de changement de vitesse d'une boîte de vitesses automatique, qui est montée dans une chaîne cinématique d'un véhicule automobile entre un moteur d'entraînement et un entraînement d'essieu, qui est munie d'embrayages de marche non synchronisés et dont l'arbre d'entrée peut être relié à l'arbre de commande du moteur d'entraînement au moyen d'un embrayage de séparation à commande automatique, dans lequel, lors d'un passage à une vitesse supérieure, la synchronisation du rapport cible, l'embrayage de séparation étant ouvert, est effectuée par le réglage d'un couple de freinage (M_{Br}) largement constant à un frein d'engrenage en relation d'entraînement avec l'arbre d'entrée, **caractérisé en ce que**, lorsque la vitesse de rotation d'entrée (n_{GKE}) s'approche de la vitesse de rotation de sortie (n_{GKA}) de l'embrayage de marche du rapport cible, l'embrayage de séparation est, pour terminer la synchronisation, partiellement fermé et de nouveau ouvert environ en même temps que le desserrage du frein d'engrenage.

2. Procédé selon la revendication 1, **caractérisé en ce que** le frein d'engrenage est actionné plus longtemps avec le couple de freinage inchangé (M_{Br}).

3. Procédé selon la revendication 1 ou 2, **caractérisé en ce que** l'on règle un couple de freinage plus élevé (M_{Br}) au frein d'engrenage.

4. Procédé selon la revendication 3, **caractérisé en ce que** le couple de freinage plus élevé (M_{Br}) du frein d'engrenage est prédéterminée par construction en utilisant un frein d'engrenage renforcé.

5. Procédé selon la revendication 3, **caractérisé en ce que** le couple de freinage plus élevé (M_{Br}) du frein d'engrenage est produit par un actionnement du frein d'engrenage avec une force d'application accrue ou une pression d'application accrue.

6. Procédé selon l'une quelconque des revendications 1 à 5, **caractérisé en ce que** la fermeture de l'embrayage de séparation commence (t3) lorsque l'on atteint ou lorsque l'on descend en dessous d'une première différence de vitesse de rotation limite plus élevée prédéfinie (Δn_{GK_Gr1}) à l'embrayage de marche du rapport cible.

7. Procédé selon l'une quelconque des revendications 1 à 6, **caractérisé en ce que** l'ouverture de l'embrayage de séparation commence (t4) lorsque l'on atteint ou lorsque l'on descend en dessous d'une deuxième différence de vitesse de rotation limite plus basse prédéfinie (Δn_{GK_Gr2} ; |Δn_{GK_Gr21}| < |Δn_{GK_Gr1}|) à l'embrayage de marche du rapport cible.

8. Procédé selon l'une quelconque des revendications 1 à 7, **caractérisé en ce que** l'on régule la fermeture et l'ouverture de l'embrayage de séparation respectivement en fonction de la différence de vitesse de rotation instantanée (Δn_{GK} = n_{GKE} - n_{GKA}) à l'embrayage de marche du rapport cible.

9. Procédé selon la revendication 8, **caractérisé en ce que**, lors de la fermeture de l'embrayage de séparation, on régule le gradient de montée du couple de l'embrayage de séparation (*d*M_{K}/*d*t > 0) et la hauteur du couple d'embrayage réglé (M_{K}) de façon inversement proportionnelle à la différence de vitesse de rotation (Δn_{GK}) (*d*M_{K}/*d*t ∼ 1/Δn_{GK}, M_{K} ∼ 1/Δn_{GK}).

10. Procédé selon la revendication 8 ou 9, **caractérisé en ce que**, lors de l'ouverture de l'embrayage de séparation, on régule le gradient de baisse du couple de l'embrayage de séparation (*d*M_{K}/*d*t < 0) et la hauteur du couple d'embrayage réglé (M_{K}) de façon absolument proportionnelle à la différence de vitesse de rotation (Δn_{GK}) (|*d*M_{K}/*d*t| ∼ Δn_{GK}).

11. Procédé selon l'une quelconque des revendications 1 à 10, **caractérisé en ce que** l'on régule la fermeture et l'ouverture de l'embrayage de séparation respectivement en fonction du gradient de différence de vitesse de rotation instantané (*d*Δn_{GK}/*d*t < 0) à l'embrayage de marche du rapport cible.

12. Procédé selon la revendication 11, **caractérisé en ce que**, lors de la fermeture de l'embrayage de séparation, on régule le gradient de montée du couple (*d*M_{K}/*d*t > 0) et la hauteur du couple d'embrayage réglé (M_{K}) de façon proportionnelle à la valeur absolue du gradient de différence de vitesse de rotation (*d*Δn_{GK}/*d*t < 0) (*d*M_{K}/*d*t ∼ |*d*Δn_{GK}/*d*t|, M_{K} ∼ |*d*Δn_{GK}/*d*t|).

13. Procédé selon la revendication 11 ou 12, **caractérisé en ce que**, lors de l'ouverture de l'embrayage de séparation, on régule le gradient de baisse du couple (*d*M_{K}/*d*t < 0) et la hauteur du couple d'embrayage réglé (M_{K}) de façon absolument proportionnelle à la valeur absolue du gradient de différence de vitesse de rotation (*d*Δn_{GK}/*d*t) (|*d*M_{K}/*d*t| ∼ |*d*Δn_{GK}/*d*t|).
